(19) Europäisches Patentamt / European Patent Office / Office européen des brevets

(11) **EP 4 686 597 A1**

(12) **EUROPEAN PATENT APPLICATION**

(43) Date of publication:
04.02.2026 Bulletin 2026/06

(21) Application number: 25189966.2

(22) Date of filing: 16.07.2025

(51) International Patent Classification (IPC):
B60L 3/00 (2019.01)   B60L 15/10 (2006.01)
H02P 5/46 (2006.01)   B60L 15/20 (2006.01)
H02P 1/00 (2007.01)   B60K 6/00 (2006.01)
B60K 6/52 (2007.10)   B60K 17/356 (2006.01)
B60L 3/10 (2006.01)   B60L 7/26 (2006.01)
B60L 3/12 (2006.01)

(52) Cooperative Patent Classification (CPC):
B60L 3/0092; B60K 17/356; B60L 3/0061;
B60L 3/102; B60L 3/12; B60L 7/26; B60L 15/10;
B60L 15/2027; B60L 15/2054; B60W 30/18118;
H02P 5/46; B60L 2200/36; B60L 2220/42;
B60L 2240/12; B60L 2240/14;        (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 01.08.2024  CN 202411050835

(71) Applicant: Robert Bosch GmbH
70442 Stuttgart (DE)

(72) Inventors:
• JIA, Yunlong
  Wuxi, Jiangsu, 214000 (CN)
• LIU, Hailiang
  Wuxi, Jiangsu, 214000 (CN)
• ZHANG, Hantian
  Wuxi, Jiangsu, 214000 (CN)
• NI, Fanfan
  Wuxi, Jiangsu, 214000 (CN)
• GU, Chenguang
  Wuxi, Jiangsu, 214000 (CN)

(54) **METHOD, APPARATUS, CONTROLLER, VEHICLE AND PROGRAM PRODUCT FOR CONTROLLING VEHICLE ON RAMP**

(57) Examples of the present disclosure relate to a method, an apparatus, a device, a vehicle and a program product for controlling a vehicle on a ramp. The method comprises, in response to the ramp parking function of the vehicle being activated, determining a first control mode for controlling a first motor of a first electric drive axle of the vehicle and a second control mode for controlling a second motor of a second electric drive axle of the vehicle, wherein the first control mode and the second control mode are different ramp parking control modes. The method further comprises controlling the vehicle to remain stationary on the ramp based on the first control mode and the second control mode. Through the method of the examples of the present disclosure, different control modes may be assigned to the motors of the two electric drive axles when parking on a ramp. This approach ensures smooth ramp parking, minimizes the risk of slipping, and facilitates a balanced distribution of torque. As a result, it reduces the likelihood of motor damage while enhancing both the driving experience and safety.

FIG. 1

EP 4 686 597 A1

(52) Cooperative Patent Classification (CPC): (Cont.)
B60L 2240/26; B60L 2240/421; B60L 2240/423;
B60L 2240/425; B60L 2240/465; B60L 2240/642;
B60L 2250/26; B60L 2260/22; B60L 2260/28;
B60W 10/08; B60W 2552/15; B60W 2710/083;
B60W 2720/403

## Description

Technical Field

Examples of the present disclosure generally relate to the field of vehicle control, and specifically to a method, an apparatus, a device, a vehicle, and a program product for controlling a vehicle on a ramp.

Background

The vehicle control system needs to be applicable to various scenarios. For example, the automatic driving assistance control system installed on the vehicle helps the driver facilitate automated driving, the intelligent frame system equipped with a certain number of detection radars enables functions such as automatic reversing and parking, and some vehicles are also fitted with active braking systems that control braking automatically, eliminating the need for the driver to press the brake pedal. These diverse vehicle control systems have become an important part of the vehicle, helping the driver maintain control of the vehicle and improving the vehicle's maneuverability and safety.

With the rapid development of vehicle control technology, various vehicle control systems are continually being updated. For example, the automatic parking function, which has evolved from the electronic stability program (ESP), enables the vehicle to park automatically after the driver stops to stabilize the vehicle body. It also facilitates ramp parking when the vehicle is on a ramp, preventing the vehicle from slipping. To enhance the driving experience and safety for electric vehicle drivers, ramp parking technology has become increasingly important in vehicle control.

Summary of the Invention

Examples of the present disclosure provide a method, an apparatus, a controller, a vehicle, and a program product for controlling a vehicle on a ramp.

According to a first aspect of the present disclosure, a method for controlling a vehicle on a ramp is provided. The method comprises, in response to the ramp parking function of the vehicle being activated, determining a first control mode for controlling a first motor of a first electric drive axle of the vehicle and a second control mode for controlling a second motor of a second electric drive axle of the vehicle, wherein the first control mode and the second control mode are different ramp parking control modes. The method further comprises controlling the vehicle to remain stationary on the ramp based on the first control mode and the second control mode.

According to a second aspect of the present disclosure, an apparatus for controlling a vehicle on a ramp is provided. The apparatus comprises a first control mode and second control mode determination module, configured to determine a first control mode for controlling a first motor of a first electric drive axle of the vehicle and a second control mode for controlling a second motor of a second electric drive axle of the vehicle in response to the ramp parking function of the vehicle being activated, wherein the first control mode and the second control mode are different ramp parking control modes; and a vehicle ramp holding control module, configured to control the vehicle to remain stationary on the ramp based on the first control mode and the second control mode.

According to a third aspect of the present disclosure, a controller is provided. The controller comprises at least one processor, and a memory coupled to the at least one processor and having instructions stored thereon that, when executed by the at least one processor, cause the controller to perform the method of the first aspect of the present disclosure.

According to a fourth aspect of the present disclosure, a vehicle is provided. The vehicle comprises a first electric drive axle, a second electric drive axle, and a controller in the third aspect of the present disclosure.

According to a fifth aspect of the present disclosure, a machine program product is provided. The machine program product comprises machine-executable instructions, wherein the machine-executable instructions are executed by a processor to implement the steps of the method in the first aspect of the present disclosure.

Brief Description of the Drawings

FIG. 1 is a schematic diagram of an exemplary environment in which the device and/or method according to some examples of the present disclosure may be implemented;

FIG. 2 is a flow chart of a process for controlling a vehicle on a ramp according to some examples of the present disclosure;

FIG. 3 is a schematic diagram of an exemplary method for controlling a vehicle on a ramp according to some examples of the present disclosure;

FIG. 4 is a schematic diagram of a control system architecture for controlling a vehicle on a ramp according to some examples of the present disclosure;

FIG. 5 is a schematic diagram of a curve diagram of torque and brake pedal pressure respectively varying with time when controlling a vehicle on a ramp according to some examples of the present disclosure;

FIG. 6 is a schematic diagram of an apparatus for controlling a vehicle on a ramp according to some examples of the present disclosure;

FIG. 7 is a schematic block diagram of an exemplary device suitable for implementing some examples of the present disclosure.

In the various accompanying drawings, the same or corresponding numbers represent the same or corresponding portions.

Detailed Description of the Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to." The term "based on" should be understood as "at least partially based on." The term "one example" or "this example" should be understood as "at least one example." The terms "first," "second," etc. may refer to different or the same object. The text below may comprise other specific and implicit meanings.

As mentioned above, during the process of parking on a ramp, ramp parking technology has become increasingly important for vehicle control. Take the example of a driver driving an electric heavy-duty vehicle. When the electric heavy-duty vehicle is driving on flat ground, there is no risk of the vehicle rolling backward after the electric heavy-duty vehicle stops. However, when the electric heavy-duty vehicle is driving on a ramp with a specific slope, the driver may need to park on the ramp. When parking the electric heavy-duty vehicle, failing to apply the brake increases the risk of the vehicle rolling backward, compromising safety and leading to a subpar driving experience. In addition, for electric heavy-duty vehicles, the risk of slipping varies with different loads.

In relevant schemes, the motor of the electric heavy-duty vehicle is typically a single-axle drive. When the driver is parking the electric heavy-duty vehicle, for example, when the vehicle is driving on a ramp and needs to be parked on the ramp, after the driver applies the brake, the control system gathers information about the electric heavy-duty vehicle's weight and the current slope of the ramp. It then calculates the motor output torque required for parking, controlling the vehicle to stop on the ramp. However, in this case, due to the limited accuracy in measuring the slope angle and vehicle weight, this can lead to issues such as vehicle shaking, slipping, or excessive motor temperature on the ramp, potentially resulting in motor damage in severe cases.

For example, in a ramp parking solution for a single-axle-driven electric heavy-duty vehicle, the required motor output torque is calculated based on the gathered slope and vehicle weight information, so that the motor enters the torque control mode to output the corresponding torque. However, the slope and vehicle weight gathered in this way are not accurate enough, resulting in the calculated motor output torque not being able to meet the demand well, which may cause the vehicle to continue to slip.

Another solution for parking on a ramp is to control the motor to enter a speed mode. When the driver steps on the brake pedal to temporarily stop the vehicle, the motor speed is 0. When the vehicle starts to roll backward, the motor will output torque according to the actual speed of the motor during the rolling process. The greater the actual speed of the motor during the rolling process, the greater the output torque. Typically, the slipping distance of the vehicle should be controlled within a certain range, such as not exceeding 20 cm. However, due to limitations in this solution, it is unable to effectively control the slipping distance. Additionally, prolonged parking can lead to excessively high motor temperatures, posing a risk of overheating. In addition, electric heavy-duty trucks with dual-drive axles also have the above problems.

At least to address the above and other potential problems, examples of the present disclosure provide a method for controlling a vehicle on a ramp. In the method, after the ramp parking function of the vehicle is activated, the controller first determines a first control mode for controlling a first motor of a first electric drive axle and a second control mode for controlling a second motor of a second electric drive axle. The first control mode of the first motor and the second control mode of the second motor are different. After determining the first control mode for the first motor and the second control mode for the second motor, the controller uses the first control mode and the second control mode to control the two motors to keep the vehicle stationary on the ramp. In the above manner, different control modes may be assigned to the motors of the two electric drive axles when parking on a ramp. This approach ensures smooth ramp parking, minimizes the risk of rolling, and facilitates a balanced distribution of torque. As a result, it reduces the likelihood of motor damage while enhancing both the driving experience and safety.

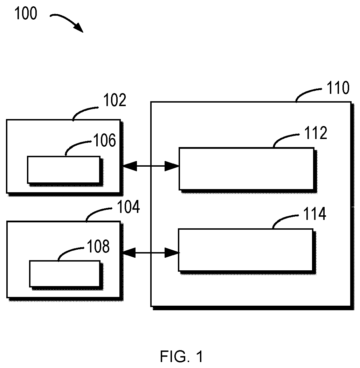

Examples of the present disclosure will be described in further detail below in conjunction with the accompanying drawings, wherein FIG. 1 illustrates an exemplary environment in which the device and/or method according to the examples of the present disclosure may be implemented.

As shown in FIG. 1, the exemplary environment 100 comprises a controller 110, which may be used to implement a parking function of a vehicle. For example, the vehicle comprises at least two electric drive axles, each of which comprises a motor for driving corresponding wheels. The controller 110 may determine the control mode of the two motors in the first electric drive axle and the second electric drive axle in the vehicle so that the vehicle remains stationary on a ramp. One of the first electric drive axle and the second electric drive axle may be a master electric drive axle, and the other may be a slave electric drive axle, wherein the master electric drive axle coordinates and controls the operation of the two electric drive axles, and the slave electric drive axle receives instructions from the master electric drive axle.

In some examples, the controller 110 may be a gearbox control unit in the first electric drive axle or the second electric drive axle. In some examples, the controller 110 may be an electronic control unit in a vehicle for an electronic stability program, an integrated braking system, or a distributed braking system. In some examples, the controller 110 may be a domain controller in a vehicle. In some examples, the controller 110 may be the vehicle's overall controller. The above examples are intended only to describe the present disclosure and are not a specific limitation of the present disclosure.

The controller 110 may also gather the vehicle mass and the angle of the current slope of the vehicle. For example, the controller 110 may gather the vehicle mass and the vehicle's incline angle from sensors equipped on the vehicle, such as mass sensors, angle sensors, etc. Additionally, the controller 110 may also gather the mass of the cargo carried by the vehicle in addition to the vehicle itself to further calculate the total mass of the vehicle and the cargo carried. In some examples, the above-mentioned vehicle is an electric heavy-duty vehicle, such as an electric truck, an electric van, and an electric trailer.

In addition, the controller 110 may determine a first control mode 112 for the first motor 106 in the first electric drive axle 102 for controlling the first motor 106 in the first electric drive axle 102. In addition, the controller 110 may also determine a second control mode 114 for the second motor 108 in the second electric drive axle 104 for controlling the second motor 108 in the second electric drive axle 104. The first control mode is different from the second control mode.

For example, the controller 110 may determine that the first control mode 112 is a torque control mode, and determine that the second control mode 114 is a speed control mode. As shown in FIG. 1, after the controller 110 determines the first control mode 112 for the first motor 106 and the second control mode 114 for the second motor 108, the determined first control mode 112 and second control mode 114 are used to further control the vehicle to remain stationary on the ramp. Alternatively, the first control mode 112 determined by the controller 110 may be a speed control mode, and the second control mode 114 determined by the controller 110 may be a torque control mode.

Through this method, different control modes may be assigned to the motors of the two electric drive axles when parking on a ramp. This approach ensures smooth ramp parking, minimizes the risk of rolling, and facilitates a balanced distribution of torque. As a result, it reduces the likelihood of motor damage while enhancing both the driving experience and safety.

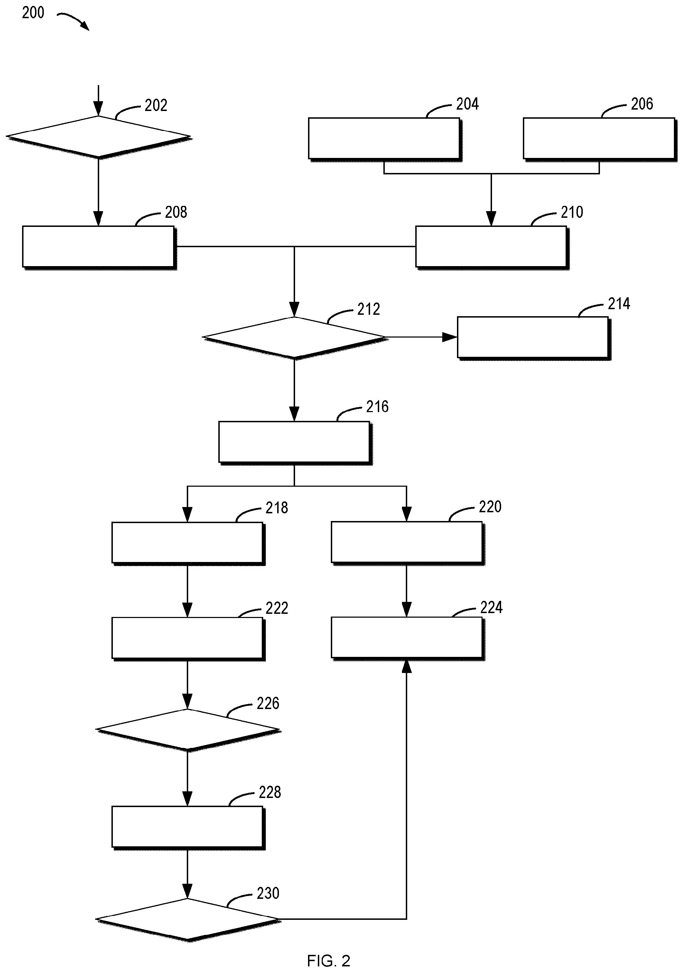

The above, in conjunction with FIG. 1, describes an exemplary environment in which some examples of the present disclosure may be implemented. A flow chart of a process for controlling a vehicle on a ramp according to some examples of the present disclosure is described below in conjunction with FIG. 2. The process shown in FIG. 2 may be executed in the environment shown in FIG. 1 or any suitable environment, for example, by the controller 110 in FIG. 1 or any suitable computing device.

As shown in process 200 of FIG. 2, the controller 110 may control the first electric drive axle and the second electric drive axle according to process 200 to adjust the actual output torque of the two motors, thereby controlling the vehicle to remain stationary on the ramp.

First, at box 202, the controller 110 determines whether the brake pedal of the vehicle stationary on the ramp is released. If the brake pedal is released, the controller 110 determines the target torque 208 required to keep the vehicle stationary on the ramp. The target torque 208 is calculated by the controller 110 by gathering the total mass of the vehicle and the slope angle of the ramp on which the vehicle is currently located. While determining the target torque 208, the controller 110 also needs to determine the maximum combined torque 210 that can be provided by the first electric drive axle 204 and the second electric drive axle 206.

Then, at block 212, the controller 110 compares the determined target torque 208 with the determined maximum combined torque 210. If the maximum combined torque 210 is less than the required target torque 208, then at block 214, the ramp parking function of the vehicle is disabled and a relevant warning is issued to the driver. For example, the message "The current vehicle condition does not support the activation of the ramp parking function. Please manually perform the ramp parking" appears on the electronic display screen of the vehicle, or the relevant prompt is directly broadcasted through the in-vehicle audio equipment to warn the driver.

If the maximum combined torque 210 is greater than or equal to the required target torque 208, then at block 216, the ramp parking function is activated. After the ramp parking function is activated, the controller 110 further determines a first control mode 218 for the first motor and a second control mode 220 for the second motor. In some examples, the controller 110 determines that the first control mode is one of a torque control mode and a speed control mode, and the second control mode is the other of the torque control mode and the speed control mode.

After determining the first control mode and the second control mode, for example, after determining that the first control mode is a torque control mode and the second control mode is a speed control mode, the controller 110 will further determine, at block 222, the desired torque that the first motor can provide, and will also determine that the expected speed for the second motor is zero. In some examples, the desired torque of the first motor is greater than or equal to the required target torque, at which time the first output torque 222 provided by the first motor may reach the target torque, so that the vehicle may remain stationary on the ramp without the participation of the second motor. In some examples, the participation of the second motor is required when the desired torque of the first motor is less than the required target torque.

When the first output torque for the first motor is gradually increased, at block 226, the controller 110 determines whether the magnitude of the first output torque reaches the magnitude of the desired torque. If the magnitude of the first output torque has not yet reached the magnitude of the desired torque, the magnitude of the first output torque continues to increase. At this point, due to the reduction of brake pressure, the vehicle may slip. Therefore, at block 230, the controller determines whether the vehicle rolls. If the vehicle rolls, the second output torque is increased at block 224 to adjust the speed of the second motor caused by the slipping to zero, thereby preventing the vehicle from rolling. If the first output torque cannot reach the first desired torque due to a partial failure of the first motor or the influence of other force majeure factors, the second motor enters operation in advance and gradually increases the second output torque to keep the second motor at zero, thereby stopping the vehicle.

In some examples, since the first motor needs to maintain the magnitude of the first output torque unchanged for a long time, the first motor may be overloaded, which may easily cause the first motor to overheat, thereby affecting driving safety. In this case, the first motor may reduce the output torque, and the second motor may increase the output torque while maintaining zero speed, so that the sum of the first output torque and the second output torque is generally kept equal to the target torque.

Through this method, different control modes may be assigned to the two motors when parking on a ramp, so as to intelligently adjust the output torque of the two motors, thereby reducing the probability of motor damage and improving driving experience and driving safety.

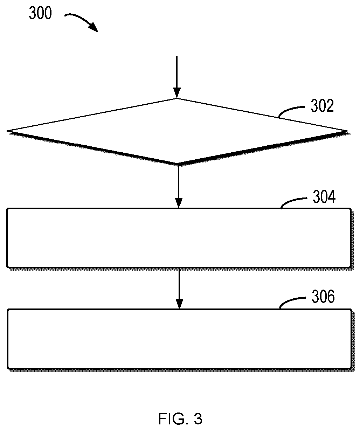

A flow chart of a process for controlling a vehicle on a ramp according to some examples of the present disclosure is described above in conjunction with FIG. 2. A schematic diagram of an exemplary method for controlling a vehicle on a ramp according to some examples of the present disclosure is described below in conjunction with FIG. 3. The method 300 may be performed in the environment shown in FIG. 1 or in any suitable environment, and may be performed by the controller 110 in FIG. 1 or any suitable computing device.

At block 302, the controller 110 determines whether the ramp parking function of the vehicle is activated. When parking on a ramp, the controller 110 typically needs to determine whether the ramp parking function of the vehicle is activated. When determining whether the ramp parking function is activated, the controller needs to gather various parameters related to the vehicle from a group of associated components to determine whether to activate the ramp parking function. For example, the controller may receive parameters and data from various sensors, overall vehicle controllers, motor control systems, motor pumps and/or gearbox pumps and other components. Then, based on these parameters and data, it is determined whether to activate the ramp parking function. In some examples, the controller 110 will only initiate the decision to activate the ramp parking function of the vehicle when it detects that the driver has released the brake pedal.

In some examples, the controller 110 may determine whether to activate the ramp parking function based on the torque provided by the two electric drive axles. At this point, the controller gathers the maximum output torque that may be output by the first motor of the first electric drive axle and the maximum torque that may be output by the second motor of the second electric drive axle. Then the controller determines the maximum combined torque that may be output by the two electric drive axles based on the maximum output torque of the two motors. For example, the maximum torque that may be output by the first motor of the first electric drive axle is 5000 Nm, and the maximum torque that may be output by the second motor of the second electric drive axle is 6000 Nm. Therefore, the maximum combined torque of the two electric drive axles is 11000 Nm. Then, the controller 110 may also determine the torque required for the vehicle to remain stationary on the ramp. In one example, the target torque for the vehicle to remain stationary is determined based on the angle of the ramp and the weight of the vehicle. For example, the target torque is calculated by a function of the relationship between torque, weight and angle. Then, the controller 110 compares the maximum combined torque with the target torque. When the maximum combined torque is greater than or equal to the target torque, it indicates that the torque provided by the motors of the electric drive axles can meet the requirement of the vehicle to remain stationary on the ramp, and the controller activates the ramp parking function. If the maximum combined torque is less than the target torque, it indicates that the electric drive axle cannot maintain the vehicle stationary on the ramp, and the ramp parking function cannot be performed at this point. Additionally, the controller may also determine that the vehicle is on a ramp and is stationary based on data gathered by sensors.

In some examples, the controller 110 may gather the vehicle's own mass and the vehicle's incline angle from a mass sensor and an angle sensor equipped on the vehicle. Additionally, the controller 110 may also gather the mass of the cargo carried by the vehicle in addition to the vehicle itself to further calculate the total mass of the vehicle and the cargo carried.

In some examples, the controller may also determine the current status of the first motor and the second motor corresponding to the first electric drive axle and the second electric drive axle, respectively, based on the received parameters and data. For example, before determining whether to activate the ramp parking function, both the first motor and the second motor undergo a fault diagnosis. If it is determined that both motors have faults but can still provide sufficient torque without affecting the activation of the ramp parking function, the ramp parking function will be activated. If it is determined that either the first motor or the second motor has a serious fault and cannot provide the torque required to activate the ramp parking function, the controller will disable the ramp parking function.

At block 304, in response to the ramp parking function of the vehicle being activated, the controller 110 determines a first control mode for controlling a first motor of a first electric drive axle of the vehicle and a second control mode for controlling a second motor of a second electric drive axle of the vehicle. For example, the controller 110 determines a first control mode 112 for the first motor 106 and a second control mode for the second motor 108. The first control mode 112 is one of a torque control mode or a speed control mode, and the second control mode 114 is the other of the torque control mode or the speed control mode. Additionally, the first control mode for the first motor and the second control mode for the second motor are pre-set.

After determining that the ramp parking function of the vehicle is activated, the controller 110 may assign one of the torque control mode and the speed control mode to the first motor of the first electric drive axle so that the motor operates in the mode, and assign the other of the torque control mode and the speed control mode to the second motor of the second electric drive axle so that the second motor operates in the other mode.

At block 306, the controller 110 controls the vehicle to remain stationary on the ramp based on the first control mode and the second control mode. After determining the first control mode 112 for the first motor 106 and the second control mode 114 for the second motor 108, the controller 110 further controls the vehicle to remain stationary on the ramp using the determined first control mode 112 and the second control mode 114.

In some examples, the first motor may be determined to be in torque control mode, and then the controller may determine the desired torque allocated to the first motor. In one example, the first desired torque required to be provided by the first motor may be calculated based on the torque allocation formula for the first motor. In another example, the controller 110 may determine the first desired torque provided by the first motor 106 based on a mapping relationship between a predetermined required total torque and the torque provided by the first motor 106. For example, the mapping relationship is shown by a list, which includes different values of the required total torque and the torque values provided by the first motor 106 corresponding to the different values. In addition, since the second motor 108 adopts a speed control mode, the second motor is controlled to zero speed. The following is mainly described based on the first motor being in torque control mode and the second motor being in speed control mode. In some examples, the second motor may be determined to be in torque control mode and the first motor may be determined to be in speed control mode. Its operation is similar to that of the first motor being in torque control mode and the second motor being in speed control mode, and will not be described in detail here.

During the process when the first output torque of the first motor 106 is gradually increased, the controller 110 determines whether the magnitude of the first output torque reaches the magnitude of the desired torque. If the magnitude of the first output torque has not yet reached the magnitude of the desired torque, the magnitude of the first output torque continues to increase. If the magnitude of the first output torque reaches the magnitude of the desired torque, the brake pressure is reduced. At this point, due to the reduction in brake pressure, the controller determines whether the vehicle is rolling. If the vehicle is not rolling, the magnitude of the first output torque of the first motor is maintained unchanged and the brake pressure is continued to be reduced. If the vehicle rolls, the controller 110 controls the increase of the second output torque of the second motor 108 to keep the second motor 108 at zero speed.

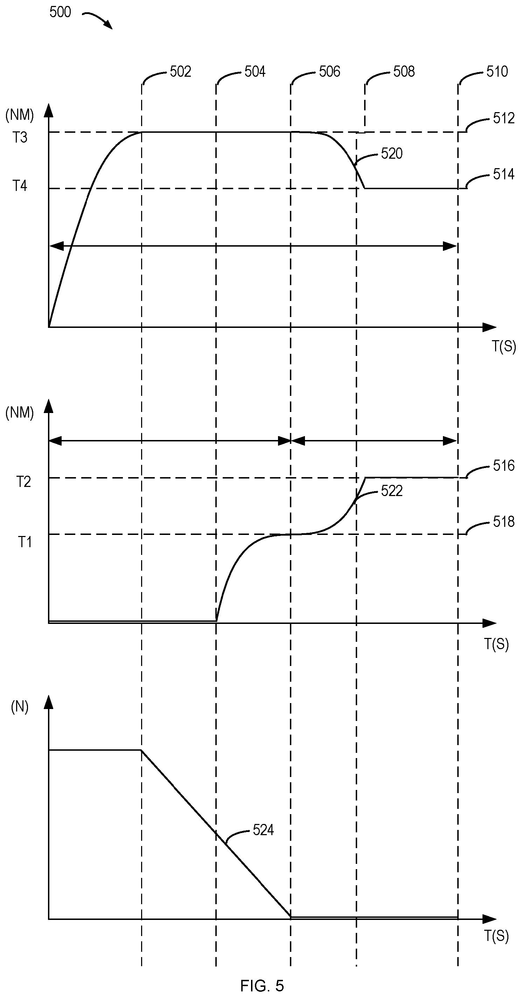

In some examples, since the first motor needs to maintain the magnitude of the first output torque unchanged for a long time, the first motor may be overloaded, which may easily cause the first motor to overheat, thereby affecting driving safety. At this point, the second motor 108 may increase the output torque while maintaining the vehicle at zero speed, and while the second motor increases the output torque, the controller 110 controls the first output torque of the first motor 106 to decrease, and generally maintains the sum of the first output torque and the second output torque equal to the target torque. A curve diagram of the torque magnitude of the first motor of the first electric drive axle and the second motor of the second electric drive axle varying with time and a diagram of the brake pedal pressure magnitude varying with time will be described in FIG. 5.

Through this method, different control modes may be assigned to the motors of the two electric drive axles when parking on a ramp. This approach ensures smooth ramp parking, minimizes the risk of rolling, and facilitates a balanced distribution of torque. As a result, it reduces the likelihood of motor damage while enhancing both the driving experience and safety.

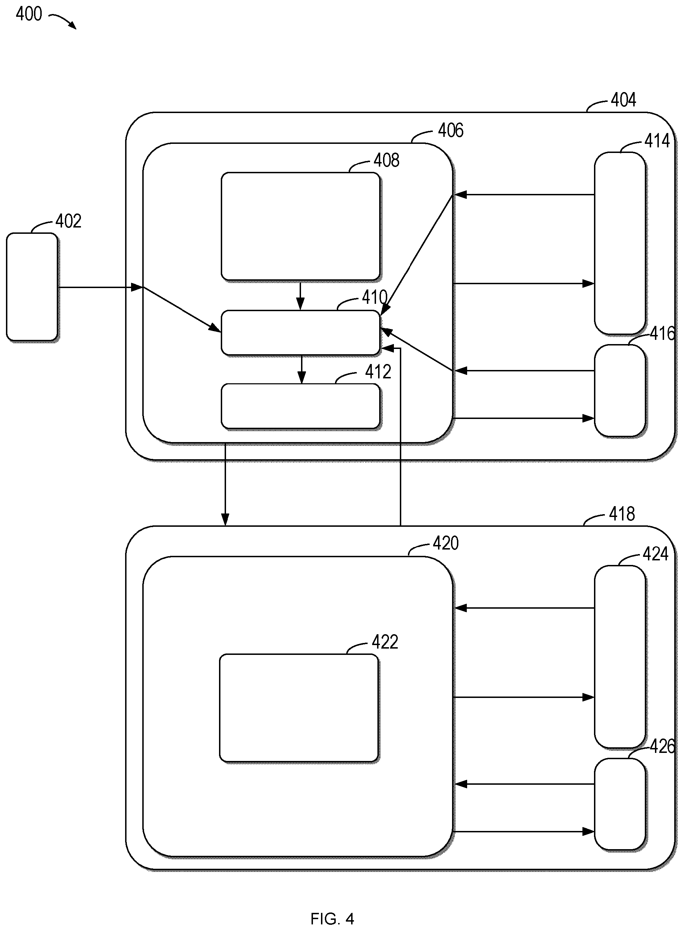

A flow chart of the method for controlling a vehicle on a ramp according to some examples of the present disclosure is described above in conjunction with FIG. 3. A schematic diagram of the control system architecture for controlling a vehicle on a ramp according to some examples of the present disclosure is further described below in conjunction with FIG. 4.

As shown in example 400, the control system architecture comprises an overall vehicle controller 402, a first electric drive axle 404, a gearbox control unit 406 of the first electric drive axle, a gearbox 408 of the first electric drive axle, a ramp parking coordination module 410, a torque distribution module 412, a first motor control unit 414, a pump 416 of the first electric drive axle, a second electric drive axle 418, a gearbox control unit 420 of the second electric drive axle, a gearbox 422 of the second electric drive axle, a second motor control unit 424, and a pump 426 of the second electric drive axle.

The ramp parking coordination module 410 gathers various parameters from the vehicle. Some of the parameters are from the overall vehicle controller 402, such as brake pedal information, accelerator pedal information, gear shift information, handbrake information, vehicle readiness status information, and vehicle speed information. Additionally, for some vehicles equipped with an ESP system, the ramp parking coordination module 410 also gathers ESP status information from the overall vehicle controller 402.

Then, taking the first electric drive axle 404 as an example, the ramp parking coordination module 410 will also receive parameter information from the gearbox 408, such as the maximum available torque, the minimum available torque, the current gear, the gearbox temperature and other information. The ramp parking coordination module 410 will also receive parameter information related to the first motor control unit 414, such as the motor state of the first motor, the motor speed, the first output torque of the first motor, the first maximum available torque, the first minimum available torque, the temperature of the first motor and the fault level of the first motor. The ramp parking coordination module 410 will also receive information related to the pump 416 of the first electric drive axle, such as the state of the pump (such as the temperature of the pump) and the actual speed of the pump.

The ramp parking coordination module 410 of the first electric drive axle 404 also returns relevant information to the first motor control unit 414, such as torque control status and desired torque. It also returns relevant information to the pump 416, such as the first desired speed for cooling the pump. Additionally, the parameter exchange between the second electric drive axle 418 and the second motor control unit 424 and the pump 416 in the second electric drive axle 418 is consistent with that of the first electric drive axle 404.

Moreover, parameters are also exchanged between the first electric drive axle 404 and the second electric drive axle 418. For example, when the first motor of the first electric drive axle 404 is in the torque control mode, the first electric drive axle 404 sends relevant information to the second electric drive axle 418 so that the control mode of the second motor in the second electric drive axle 418 is the speed control mode and the second motor is kept at zero speed. Similarly, the first electric drive axle 404 may also receive information such as the maximum available torque, the minimum available torque and the fault level of the second electric drive axle 418, so that the first electric drive axle 404 may better control the second electric drive axle.

In some examples, when the first motor or the second motor outputs a large torque for a long time, the controller 110 may control the speed of the pump in the electric drive axle to reduce the temperature of the pump, thereby reducing the temperature of the corresponding motor, better protecting the motor, and preventing the motor from being damaged due to long-term large torque output. Additionally, the pumps in the first electric drive axle 404 and the second electric drive axle 418 both comprise motor pumps and/or gearbox pumps.

In some examples, before enabling the torque distribution module 410, the gearbox control unit 406 needs to first determine the current states of the first motor and the second motor corresponding to the first electric drive axle and the second electric drive axle, respectively. Then, the gearbox control unit 406 determines whether to activate the ramp parking coordination module 410. For example, if the combined torque output by the two motors is greater than or equal to the target torque required for parking, the ramp parking function is activated. If the combined torque output by the two motors is less than the target torque required for parking, the ramp parking function is disabled and the torque distribution module is disabled.

In some examples, the exchange of the above parameters is achieved through the vehicle's control bus. In some examples, the controller gathers relevant parameters through sensors equipped on the vehicle, such as gathering the total mass of the vehicle through a mass sensor, gathering the angle of the ramp on which the vehicle is located through an angle sensor, etc.

A schematic diagram of the control system architecture for controlling a vehicle on a ramp according to some examples of the present disclosure is described above in conjunction with FIG. 4. A schematic diagram of a curve diagram of torque and brake pedal pressure respectively varying with time when controlling a vehicle on a ramp according to some examples of the present disclosure is described above in conjunction with FIG. 5.

In the exemplary process 500, there are three curve graphs from top to bottom, which are a first curve graph of a curve 520 showing the change of the magnitude of the first output torque over time, a second curve graph of a curve 522 showing the change of the magnitude of the second output torque over time, and a third curve graph of a curve 524 showing the change of the magnitude of the brake pedal pressure over time.

The X-axis of the three graphs represents time, the Y-axis of the first graph and the second graph respectively represents the magnitude of the output torque of the first motor and the second motor, and the Y-axis of the third graph represents the magnitude of the brake pedal pressure. In the three graphs, the values at the intersection of the X-axis and the Y-axis are all 0. That is, the time represented by the X-axis is 0, the magnitude of the output torque represented by the Y-axis of the first graph and the second graph respectively is 0, and the magnitude of the brake pedal pressure in the third graph is also 0. In addition, since the changes in time are consistent, the three graphs are divided into 5 sections by dashed lines 502, 504, 506, 508 and 510. Among them, from the X-axis 0 to the dashed line 502 is the first stage, from the dashed line 502 to the dashed line 504 is the second stage, from the dashed line 504 to the dashed line 506 is the third stage, from the dashed line 506 to the dashed line 508 is the fourth stage, and from the dashed line 508 to the dashed line 510 is the fifth stage.

In addition, in the first two graphs, the dashed line 512 represents the output torque magnitude T3, the dashed line 514 represents the output torque magnitude T4, the dashed line 516 represents the output torque magnitude T2, and the dashed line 518 represents the output torque magnitude T1.

The specific torque magnitude and the change in the brake pedal pressure magnitude when controlling the vehicle on a ramp are described in detail below in conjunction with FIG. 5. When the driver drives onto a ramp with a certain angle and needs to stop, the driver steps on the brake pedal and stops the vehicle on the ramp, for example, at a slope of 10 degrees. At this point, the stationary state of the vehicle is caused by the braking effect of the brake pedal. When the driver needs to leave and release the brake pedal, the controller needs to determine whether to activate the ramp parking function. At this point, it is in the first stage and the pressure of the brake pedal remains unchanged.

When it is determined that the ramp parking function is activated, the controller calculates the first desired torque T3 that the first motor needs to output and gradually increases the magnitude of the first output torque at a certain speed by the first motor to reach the first desired torque T3. The first desired torque T3 may be calculated by the following formula (1):

$$T3 = \frac{r \times mg \sin \theta}{i} \times \text{f1} \qquad (1)$$

wherein, r represents the wheel radius, m represents the total mass of the vehicle, g is the gravitational acceleration constant, $\theta$ is the angle of the ramp on which the vehicle is located, i is the transmission ratio, and f1 is the first torque coefficient. The first desired torque of the first motor may be calculated through the above calculation.

After the first output torque gradually increases and reaches the first desired torque, the second stage is entered, and the first output torque remains unchanged. At this point, the brake pedal pressure begins to decrease. The output torque of the second motor in the first and second stages is 0 because the reduced brake pedal pressure and the first output torque may still keep the vehicle stationary on the ramp. However, after entering the third stage, as the brake pedal pressure further decreases, the vehicle can no longer remain stationary on the ramp and begins to slip. At this point, the first output torque remains unchanged. In order to keep the vehicle at zero speed, the second motor in the speed control mode begins to gradually increase the second output torque to a value of T1. At this point, the sum of the torque values output by the first motor and the second motor is $T_{total}$. Then, the fourth stage is entered. In order to prevent the first motor from overheating and causing damage, the first output torque is gradually reduced from the fourth stage. The first output torque is reduced from T3 to T4, and the second output torque of the second motor is increased from T1 to T2. The above-mentioned $T_{total}$, T4 and T2 may be calculated by the following formulas (2), (3) and (4):

$$T_{total} = T3 + \text{T1} \quad (2)$$

$$T4 = T3 \times \text{f2} \quad (3)$$

$$T2 = T_{total} - T4 \quad (4)$$

wherein, f2 is the second torque coefficient.

Subsequently, when the first output torque decreases to T4 and the second output torque increases to T2, in the fifth stage, the first output torque is maintained at T4 and the second output torque is maintained at T2. Thus, the ramp parking is completed, so that the vehicle remains stationary on the ramp.

In some examples, when the vehicle remains stationary on a ramp with a smaller slope, the torque required is smaller. At this point, either the first motor or the second motor may provide an output torque sufficient to stop the vehicle on the ramp, and one of the motors may be in a non-control mode and does not provide any output torque.

In some examples, when the total mass of the vehicle is large, both the first motor and the second motor need to provide corresponding output torques. For example, if the first output torque is 8000 Nm and the second output torque is 2000 Nm, the output torques of the two motors may be adjusted. For example, the first output torque may be adjusted to 6000 Nm and the second output torque may be adjusted to 4000 Nm. This may reduce the load of one of the motors to reduce the risk of motor overheating.

Through this method, different control modes may be assigned to the two motors when parking on a ramp, so as to intelligently adjust the output torque of the two motors and cool the motors and electronic pumps, thereby reducing the probability of motor damage and improving driving experience and driving safety.

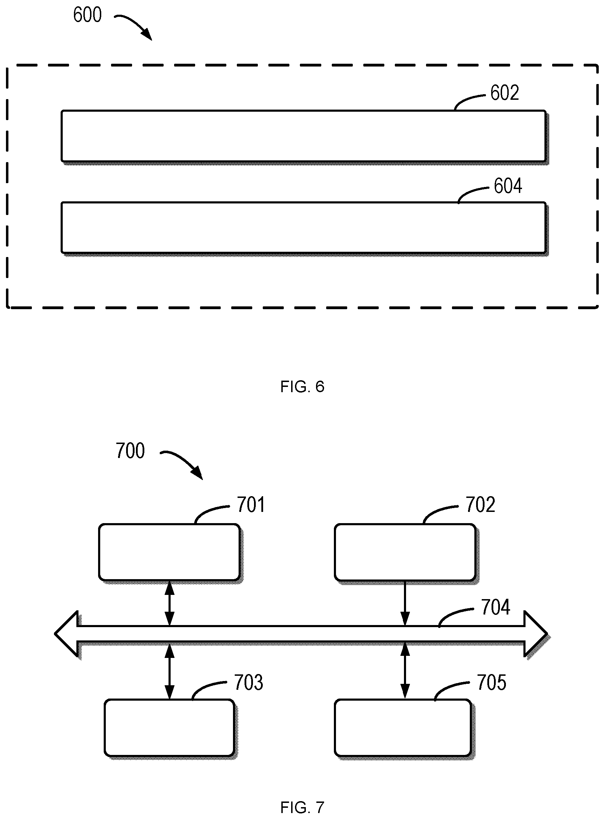

FIG. 6 further illustrates a schematic diagram of an apparatus for controlling a vehicle on a ramp according to examples of the present disclosure. The apparatus 600 may be applied to the controller 110, which may comprise a plurality of modules for performing the corresponding steps in the method 300 discussed in FIG. 3. As shown in FIG. 6, the apparatus 600 comprises a first control mode and second control mode determination module 602, configured to determine a first control mode for controlling a first motor of a first electric drive axle of the vehicle and a second control mode for controlling a second motor of a second electric drive axle of the vehicle in response to the ramp parking function of the vehicle being activated, wherein the first control mode and the second control mode are different ramp parking control modes; and a vehicle ramp holding control module 604, configured to control the vehicle to remain stationary on the ramp based on the first control mode and the second control mode.

In some examples, the apparatus 600 further comprises: a target torque determination module, configured to determine a target torque for keeping the vehicle stationary on the ramp in response to the brake pedal of the vehicle being released; a maximum combined torque determination module, configured to determine a maximum combined torque that may be provided by the first electric drive axle and the second electric drive axle; and a ramp parking function activation module, configured to activate the ramp parking function of the vehicle in response to the maximum combined torque being greater than or equal to the target torque.

In some examples, the target torque determination module comprises: an inclination angle and weight determination module configured to determine the inclination angle of the ramp and the weight of the vehicle; and a target torque determination module configured to determine the target torque based on the inclination angle and the weight.

In some examples, the maximum combined torque determination module comprises: a first maximum available torque and second maximum available torque determination module, configured to gather a first maximum available torque provided by the first electric drive axle and a second maximum available torque provided by the second electric drive axle; and a maximum combined torque determination module, configured to determine the maximum combined torque based on the first maximum available torque and the second maximum available torque.

In some examples, the first control mode and second control mode determination module 602 comprises: a first torque control mode determination module, configured to determine the torque control mode for controlling the first motor; and a first speed control mode determination module, configured to determine the speed control mode for controlling the second motor.

In some examples, the first control mode and second control mode determination module 602 comprises: a second speed control mode determination module, configured to determine the speed control mode for controlling the first motor; and a second torque control mode determination module, configured to determine the torque control mode for controlling the second motor.

In some examples, the vehicle ramp holding control module 604 comprises: a control parameter determination module, configured to determine a first control parameter corresponding to a first control mode and a second control parameter corresponding to a second control mode, the first control parameter being different from the second control parameter; and a holding control module, configured to control the first motor and the second motor based on the first control parameter and the second control parameter to keep the vehicle stationary on the ramp.

In some examples, the first control mode is a torque control mode, the second control mode is a speed control mode, and the control parameter determination module comprises: a desired torque determination module, configured to determine the first control parameter as the desired torque provided by the first motor based on the first control mode; and a zero speed determination module, configured to determine the second control parameter as the zero speed provided by the second motor based on the second control mode.

In some examples, the holding control module comprises: a first output torque increasing module, configured to increase a first output torque output by the first motor; a brake pressure reducing module, configured to reduce brake pressure in response to the first output torque reaching a desired torque; and a second output torque increasing module, configured to increase a second output torque of the second motor to maintain the second motor at zero speed in response to the vehicle slipping during the process of reducing the brake pressure.

In some examples, the holding control module further comprises: an actual output torque determination module, configured to determine an actual output torque for the vehicle based on the first output torque and the second output torque; and a first output torque and second output torque adjustment module, configured to readjust the first output torque output by the first motor and the second output torque output by the second motor based on the actual output torque.

FIG. 7 shows a schematic block diagram of an example apparatus 700 that can be used to implement examples of the present disclosure. The controller 110 of FIG. 1 may be implemented using the device 700. As shown in the figure, the device 700 comprises a central processing unit (CPU) 701, which may execute various appropriate actions and processes according to computer program instructions stored in a read-only memory (ROM) 702 and loaded into a random access memory (RAM) 703. Various programs and data required for the operation of the device 700 may also be stored in the RAM 703. The processor 701, the ROM 702, and the RAM 703 are interconnected through a bus 704. An input/output (I/O) interface 705 is also connected to the bus 704.

The various processes and processing described above, such as the process 200 and the method 300, may be executed by the processor 701. For example, in some examples, the process 200 and the method 300 may be implemented as a computer software program tangibly contained in a machine-readable medium. In some examples, a part or all of the computer programs may be loaded and/or installed onto the apparatus 700 via the ROM 702. When the computer program is loaded onto the RAM 703 and executed by the processor 701, one or more actions of the process 200 and the method 300 described above may be performed.

The present disclosure may be a method, apparatus, system and/or computer program product. The computer program product may comprise a computer-readable storage medium uploaded with computer-readable program instructions for performing various aspects of the present disclosure.

The computer-readable storage medium may be a tangible device that maintains and stores instructions used to instruct execution devices. The computer-readable storage medium, for example, may be - but is not limited to - an electrical storage device, magnetic storage device, optical storage device, electromagnetic storage device, semiconductor memory device, or any suitable combination of the above. More specific examples of the computer-readable storage medium (a non-exhaustive list) comprise: a portable computer disk, a hard disk, a random access memory (RAM), a read-only memory (ROM), an erasable programmable read-only memory (EPROM or flash), a static random access memory (SRAM), a portable compact disc read-only memory (CD-ROM), a digital versatile disc (DVD), a memory stick, a floppy disk, or a mechanical coder, such as a punch card with instructions or structures with protrusions in grooves or indentations, as well as any suitable combinations of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein may be downloaded to various computing/processing devices from computer-readable storage medium, or downloaded from networks, such as the Internet, a local area network, a wide-area network and/or a wireless network to external computers or external storage devices. The networks may comprise copper transmission cables, optical fiber transmissions, wireless transmissions, routers, firewalls, switches, gateway computers, and/or edge servers. The network adapter card or network interface in each computing/processing device receives the computer-readable program instructions from the network and forwards the computer-readable program instructions for storage in computer-readable storage medium of each computing/processing device.

The computer program instructions used to execute the operations of the present disclosure may be assembly instructions, instructions set architecture (ISA) instructions, machine instructions, machine-related instructions, microcode, firmware instructions, state-setting data, or source code or object code written with any combination of one or many programming languages, with the programming languages including object-oriented programming languages such as Smalltalk, C++, etc., as well as conventional procedural programming languages such as "C" language or similar programming languages. Computer-readable program instructions may be fully executed on the user's computer, partially executed on the user's computer, executed as an independent software package, partially executed on the user's computer and partially executed on a remote computer, or fully executed on a remote computer or server. Where a remote computer is involved, the remote computer may be connected to the user's computer through any type of network, including local area network (LAN) or wide area network (WAN), or it may be connected to an external computer (such as by using an Internet service provider for Internet connection). In some examples, the state information of computer-readable program instructions is used to personalize custom electronic circuits, such as a programmable logic circuit, field-programmable gate array (FPGA) or programmable logic array (PLA), wherein the electronic circuit is able to execute computer-readable program instructions, thereby achieving the various aspects of the present disclosure.

Various aspects of the present disclosure are described herein with reference to flow charts and/or block diagrams depicting methods, apparatus (systems), and computer program products according to the examples of the present disclosure. It should be understood that every block in the flow charts and/or block diagrams and the combinations of various blocks in the flow charts and/or block diagrams may be implemented by computer-readable program instructions.

These computer-readable program instructions may be provided to general-purpose computers, dedicated computers or the processing units of other programmable data processing apparatuses, thereby producing a type of machine, such that when these instructions are executed by the computers or processing units of other programmable data processing apparatuses, an apparatus that realizes the functions/actions stipulated in one or more boxes in the flow charts and/or block diagrams is produced. These computer-readable program instructions may also be stored in computer-readable storage medium, enabling computers, programmable data processing apparatuses, and/or other devices to operate in a specific manner. Therefore, the computer-readable media containing instructions comprise a manufactured product that comprises instructions for implementing various aspects of the functions/actions specified in one or more boxes in the flow charts and/or block diagrams.

The computer-readable program instructions may also be loaded onto a computer, other programmable data processing apparatuses, or other devices, enabling a series of operational steps to be executed on the computer, other programmable data processing apparatuses, or other devices to generate a computer-implemented process. This enables the instructions executed on the computer, other programmable data processing apparatuses, or other devices to implement the functions/actions specified in one or more boxes in the flow charts and/or block diagrams.

The flow charts and block diagrams in the accompanying drawings show the system architecture, functions and operations that may be implemented based on the systems, methods and computer program products according to the plurality of examples of the present disclosure. Regarding this, every block in the flow chart or block diagram can represent a part of a module, program section or instructions, wherein the part of the module, program section or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be substantially performed in a concurrent manner and they may also sometimes be performed in reverse order, depending on the functions involved. It must also be noted that every block in the block diagrams and/or flow charts, as well as combinations of blocks in the block diagrams and/or flow charts may be implemented by dedicated hardware-based systems used to perform the stipulated functions or actions, or implemented by using combinations of dedicated hardware and computer instructions.

The various examples of the present disclosure have been described above. The descriptions provided are exemplary and not exhaustive, and they are also not limited to the disclosed examples. Many modifications and variations will be apparent to those skilled in the art without departing from the scope and spirit of the described examples. The selection of terms used in this text aims to best explain the principles and actual application of the various embodiments, the technological improvements in the technology in the market, or allow others of ordinary skill in the art to understand the various embodiments disclosed in this text.

**Claims**

1. A method (300) for controlling a vehicle on a ramp, comprising:

   in response to a ramp parking function of a vehicle being activated, determining (304) a first control mode for controlling a first motor of a first electric drive axle of the vehicle and a second control mode for controlling a second motor of a second electric drive axle of the vehicle, wherein the first control mode and the second control mode are different ramp parking control modes; and
   based on the first control mode and the second control mode, controlling (306) the vehicle to remain stationary on the ramp.

2. The method (300) according to claim 1, further comprising:

   in response to a brake pedal of the vehicle stationary on a ramp being released, determining a target torque for keeping the vehicle stationary on the ramp;
   determining a maximum combined torque that may be provided by the first electric drive axle and the second electric drive axle; and
   in response to the maximum combined torque being greater than or equal to the target torque, activating the ramp parking function of the vehicle.

3. The method (300) according to claim 2, wherein determining a target torque for keeping the vehicle stationary on the ramp comprises:

   determining inclination angle of the ramp and weight of the vehicle; and
   determining the target torque based on the inclination angle and the weight.

4. The method (300) according to claim 2, wherein determining the maximum combined torque that may be provided by the first electric drive axle and the second electric drive axle comprises:

   gathering a first maximum available torque provided by the first electric drive axle and a second maximum available torque provided by the second electric drive axle; and
   determining the maximum combined torque based on the first maximum available torque and the second maximum available torque.

5. The method (300) according to claim 2, further comprising:
   in response to the maximum combined torque being less than the target torque, disabling the ramp parking function of the vehicle.

6. The method (300) according to claim 1, wherein determining a first control mode for controlling a first motor of a first electric drive axle of the vehicle and a second control mode for controlling a second motor of a second electric drive axle of the vehicle comprises:

> determining a torque control mode for controlling the first motor; and
> determining a speed control mode for controlling the second motor.

7. The method (300) according to claim 1, wherein determining a first control mode for controlling a first motor of a first electric drive axle of the vehicle and a second control mode for controlling a second motor of a second electric drive axle of the vehicle comprises:

> determining a speed control mode for controlling the first motor; and
> determining a torque control mode for controlling the second motor.

8. The method (300) according to claim 1, wherein based on the first control mode and the second control mode, controlling the vehicle to remain stationary on the ramp comprises:

> determining a first control parameter corresponding to the first control mode and a second control parameter corresponding to the second control mode, the first control parameter being different from the second control parameter; and
> based on the first control parameter and the second control parameter, controlling the first motor and the second motor to keep the vehicle stationary on the ramp.

9. The method (300) according to claim 8, wherein the first control mode is a torque control mode, the second control mode is a speed control mode, and determining a first control parameter corresponding to the first control mode and a second control parameter corresponding to the second control mode comprises:

> based on the first control mode, determining the first control parameter as a desired torque provided by the first motor; and
> based on the second control mode, determining the second control parameter as a zero-speed provided by the second motor.

10. The method (300) according to claim 9, wherein based on the first control parameter and the second control parameter, controlling the first motor and the second motor to keep the vehicle stationary on the ramp comprises:

> increasing the first output torque output by the first motor;

> in response to the first output torque reaching the desired torque, reducing the brake pressure; and
> in response to the vehicle slipping during the process of reducing the brake pressure, increasing the second output torque of the second motor to keep the second motor at the zero speed.

11. The method (300) according to claim 10, wherein based on the first control parameter and the second control parameter, controlling the first motor and the second motor to keep the vehicle stationary on the ramp further comprises:

> determining an actual output torque for the vehicle based on the first output torque and the second output torque; and
> based on the actual output torque, readjusting the first output torque output by the first motor and the second output torque output by the second motor.

12. An apparatus (600) for controlling a vehicle on a ramp, comprising:

> a first control mode and second control mode determination module (602), configured to determine a first control mode for controlling a first motor of a first electric drive axle of the vehicle and a second control mode for controlling a second motor of a second electric drive axle of the vehicle in response to the ramp parking function of the vehicle being activated, wherein the first control mode and the second control mode are different ramp parking control modes; and
> a vehicle ramp holding control module (604), configured to control the vehicle to remain stationary on the ramp based on the first control mode and the second control mode.

13. A controller (700), comprising:

> at least one processor, and
> a memory, coupled to the at least one processor, and having instructions stored thereon that, when executed by the at least one processor, cause the controller to perform the method according to any one of claims 1-11.

14. A vehicle, comprising a first electric drive axle, a second electric drive axle and a controller according to claim 13.

15. A computer program product, comprising machine-executable instructions, wherein the machine-executable instructions are executed by a processor to implement the method according to any one of claims 1 to 11.

100

102

106

104

108

110

112

114

FIG. 1

FIG. 2

300

302

304

306

FIG. 3

FIG. 4

FIG. 5

600

602

604

FIG. 6

700

701 702

704

703 705

FIG. 7

## EUROPEAN SEARCH REPORT

**Application Number**

EP 25 18 9966

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 601 664 A (GEELY HOLDING GROUP CO LTD ET AL.) 27 February 2024 (2024-02-27) | 1,2,6-15 | INV. |
| A | * paragraph [0005] - paragraph [0035] * | 3-5 | B60L3/00 |
| | * paragraph [0042] - paragraph [0060] * | | B60L15/10 |
| | * paragraph [0061] - paragraph [0063]; | | H02P5/46 |
| | figure 3 * | | B60L15/20 |
| | * paragraph [0064] - paragraph [0101] * | | H02P1/00 |
| | ----- | | B60K6/00 |
| | | | B60K6/52 |
| X | CN 110 341 496 A (UNIV WUHAN TECH) 18 October 2019 (2019-10-18) | 1-5,12, 13,15 | B60K17/356 |
| | | | B60L3/10 |
| A | * paragraph [0007] - paragraph [0029] * | 6-11,14 | B60L7/26 |
| | * paragraph [0058] - paragraph [0062] * | | B60L3/12 |
| | ----- | | |
| A | EP 3 546 274 A1 (BYD CO LTD [CN]) 2 October 2019 (2019-10-02) | 1-15 | |
| | * paragraph [0031] - paragraph [0035] * | | |
| | ----- | | |

**TECHNICAL FIELDS SEARCHED (IPC)**

B60L
B60W
H02P
B60K

The present search report has been drawn up for all claims

| Place of search | Date of completion of the search | Examiner |
|---|---|---|
| The Hague | 8 December 2025 | Akbudak, Tarik |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.....................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 9966

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2025

| Patent document cited in search report | | Publication date | Patent family member(s) | | Publication date |
|---|---|---|---|---|---|
| CN 117601664 | A | 27-02-2024 | NONE | | |
| CN 110341496 | A | 18-10-2019 | NONE | | |
| EP 3546274 | A1 | 02-10-2019 | CN | 108116269 A | 05-06-2018 |
| | | | EP | 3546274 A1 | 02-10-2019 |
| | | | KR | 20190059967 A | 31-05-2019 |
| | | | US | 2020055409 A1 | 20-02-2020 |
| | | | WO | 2018095242 A1 | 31-05-2018 |

EPO FORM P0459

For more details about this annex : see Official Journal of the European Patent Office, No. 12/82